# EUROPÄISCHE PATENTSCHRIFT

(11) **EP 3 335 938 B1**
(45) Veröffentlichungstag und Bekanntmachung des Hinweises auf die Patenterteilung: **15.05.2019**
(21) Anmeldenummer: 17205917.2
(22) Anmeldetag: 07.12.2017
(51) Int. Cl.: B60R 1/04, B60R 1/06, F16C 11/06

(54) **KUGELGELENKVORRICHTUNG, BEFESTIGUNGSVORRICHTUNG UND INDIREKTES SICHTSYSTEM FÜR FAHRZEUGE**
BALL AND SOCKET JOINT ASSEMBLY, FIXING DEVICE AND INDIRECT VISION SYSTEM FOR VEHICLES
DISPOSITIF FORMANT JOINT À ROTULE, DISPOSITIF DE FIXATION ET SYSTÈME DE VISION INDIRECT POUR VÉHICULES

(30) Priorität: 16.12.2016 DE 102016225293
(43) Veröffentlichungstag der Anmeldung: 20.06.2018
(73) Patentinhaber: MEKRA LANG GmbH & Co. KG, 91465 Ergersheim (DE)
(72) Erfinder: Dr. Lang, Werner, 91465 Ergersheim (DE); Hecht, Georg, 91629 Weihenzell (DE)
(74) Vertreter: Winter, Brandl, Fürniss, Hübner, Röss, Kaiser, Polte - Partnerschaft mbB

(56) Entgegenhaltungen:
- EP-A1- 2 484 559
- WO-A1-91/10933
- JP-A- 2003 312 365

## Beschreibung

Die Erfindung betrifft eine Kugelgelenkvorrichtung gemäß Anspruch 1, eine Befestigungsvorrichtung mit einer solchen Kugelgelenkvorrichtung nach Anspruch 12 sowie ein indirektes Sichtsystem mit einer solchen Befestigungsvorrichtung nach Anspruch 13.

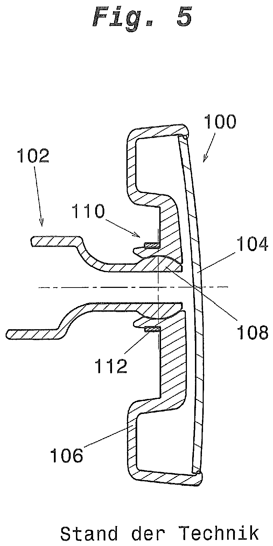

In Figur 5 ist eine bekannte Kugelgelenkvorrichtung gezeigt, mittels der ein Spiegelkopf 100 verstellbar an einem Tragarm 102 angeordnet ist. Der Spiegelkopf weist ein Spiegelglas 104 und eine Spiegelhalteplatte 106 auf. Der Tragarm 102 umfasst an seinem Ende einen konvexen kugelringförmigen Abschnitt 108, der von einer komplementär geformten Eingriffseinrichtung 110 an der Spiegelhalteplatte 106 übergriffen wird. Durch eine Ringfeder 112 wird die Eingriffseinrichtung 110 an den kugelringförmigen Abschnitt 108 angedrückt und gesichert. Nachteilig bei dieser bekannten Kugelgelenkvorrichtung ist, dass für hohe Verstellmomente große Abstützwirklängen oder Kugelflächen erforderlich sind, dadurch ist ein relativ großer Bauraum und große Bauhöhe erforderlich. Dies ist oft aus Sicht des Designs nicht umsetzbar.

Aus der DE20305680U1 ist eine Kugelgelenkvorrichtung mit einem ersten und einem zweiten Gelenkbauteil bekannt. Das erste Gelenkbauteil umfasst ein Kugelflächenelement mit einer Außenseite, die Teil einer Kugelfläche ist. Ein korrespondierendes Kugelflächenelement an dem zweiten Gelenkbauteil kontaktiert das Kugelflächenelement an dem ersten Gelenkbauteil. Innerhalb des Kugelflächenelements an dem ersten Gelenkbauteil ist eine konvexe Kugelkappe ausgebildet, die nach Art eines Druckknopfs in eine konkave, kugelkappenförmige Aufnahme im zweiten Gelenkbauteil eingreift und so das erste mit dem zweiten Gelenkbauteil verbindet. Die Kugelflächenelemente an dem ersten und zweiten Gelenkbauteil überlappen lediglich, sie dienen zur Abgrenzung eines Kabelkanals, und tragen nicht zur Verbindung der beiden Gelenkbauteile bei. Die Verbindung erfolgt ausschließlich über die vergleichsweise kleine Druckknopfverbindung innen. Die korrespondierenden Kugelflächenelemente außen übertragen keinerlei Kraftmomente. Für die Halterung von schweren Objekten, wie z. B. Spiegeln, ist diese Gelenkverbindung daher nicht geeignet.

Aus der EP2484559A1, die den Oberbegriff des Anspruchs 1 bildet, und der WO91/10933A1 ist eine Kugelgelenkvorrichtung für eine verstellbare Spiegeleinheit bekannt, die nach Art einer Druckknopfverbindung funktioniert.

Davon ausgehend ist es Aufgabe der vorliegenden Erfindung, eine Kugelgelenkvorrichtung bereitzustellen, die eine geringe Bauhöhe und ein geringeres Bauvolumen aufweist und dennoch hohe Verstellmomente übertragen kann und größere Verstellwinkel ermöglicht.

Die Lösung dieser Aufgabe erfolgt durch die Merkmale des Anspruchs 1.

Das erste Gelenkbauteil weist ein Kugelflächenelement mit konvexer oder konkaver Außenseite auf. Die Außenseite des Kugelflächenelements ist Teil einer Kugelfläche. Eine Eingriffseinrichtung übergreift das Kugelflächenelement, so dass die Eingriffseinrichtung und das Kugelflächenelement über eine erste Kontaktfläche aneinander anliegen. Dadurch, dass die Eingriffseinrichtung das Kugelflächenelement übergreift, ergibt sich eine Art Druckknopfverbindung, die die beiden Gelenkteile miteinander verbindet. Da das Kugelflächenelement außen an dem ersten Gelenkbauteil angeordnet ist, ergibt sich eine große erste Kontaktfläche und ein großer "Druckknopf" für die Druckknopfverbindung und damit eine stärkere Verbindung zwischen den beiden Gelenkbauteilen. Durch eine kugelkappenförmige Aufnahme in dem ersten oder zweiten Gelenkbauteil und eine zugeordnete konvexe Kugelkappe in dem anderen Gelenkbauteil ergibt sich eine zweite Kontaktfläche, die einen kleineren Krümmungsradius R2 aufweist als der Krümmungsradius R1 des Kugelflächenelements. Die beiden Gelenkbauteile stützen sich über die kugelkappenförmige Aufnahme und die zugeordnete konvexe Kugelkappe aufeinander ab. Durch die zwei Kontaktflächen - innen, kugelkappenförmige Aufnahme und zugeordnete konvexe Kugelkappe und außen, Eingriffseinrichtung und Kugelflächenelement - können bei kleinerem Bauraum hohe Verstellmomente übertragen werden. Durch das Doppelkugelgelenk ist es trotz geringer Bauhöhe möglich, einen relativ großen Radius der Kontaktflächen umzusetzen und dadurch eine weite Abstützwirklänge der Kontaktflächen zu erreichen. Es werden große Kontaktflächen auf einem kleinen Bauraum ermöglicht, wodurch sich eine hohe Flächenpressung erreicht werden kann. Bei einem flachen, zweiten Gelenkbauteil, z, B. in Form eines Spiegelkopfes, kann der Drehpunkt des Kugelgelenks näher an die Spiegelscheibe heranrücken. Es sind keine zusätzlichen Verbindungselemente, wie Schrauben, Riegelbolzen oder Bajonett usw., nötig. Die beiden Gelenkbauteile sind über eine lösbare Schnappverbindung miteinander verbunden. Hierdurch werden Kosten reduziert. Durch das abschnittsweise kugelringförmige Element mit mehreren über den Umfang verteilten kugelringförmigen Abschnitten sind größere Verstellwinkel zwischen dem ersten und zweiten Gelenkbauteil möglich.

Gemäß einer bevorzugten Ausführungsform weist die kugelkappenförmige Aufnahme an dem ersten oder zweiten Gelenkbauteil eine Tiefe auf, die gleich oder kleiner ist als der Radius der Kugel aus der die kugelkappenförmige Aufnahme abgeleitet ist. Folglich stützt sich die konvexe Kugelkappe lediglich in der kugelkappenförmigen Aufnahme ab.

Gemäß einer bevorzugten Ausführungsform ist die konkave Kugelkappe komplementär zu der konvexen, kugelkappenförmigen Aufnahme geformt, sodass sich eine große kugelkappenförmige zweite Kontaktfläche und Abstützfläche ergibt.

Gemäß der bevorzugten Ausgestaltung umgreift die Eingriffseinrichtung nicht nur das Kugelflächenelement, sondern die Eingriffseinrichtung ist komplementär zu der Außenseite des Kugelflächenelements ausgeformt. Hierdurch wird die erste Kontaktfläche vergrößert und es können höhere Verstellmomente übertragen werden und die Kugelgelenkverbindung kann größere Lasten tragen.

Gemäß der vorteilhaften Ausgestaltung sind die Mittelpunkte M1 und M2 der Krümmungsradien R1 und R2 nicht identisch, sondern weichen im zehntel-Millimeter-Bereich voneinander ab. Hierdurch ergibt sich eine Vorspannung bei der Verbindung der beiden Gelenkbauteile.

Gemäß der vorteilhaften Ausgestaltung mit der elastischen Ausgestaltung des Kugelflächenelements und/oder der Eingriffseinrichtung vereinfacht sich die Montage der beiden Gelenkbauteile aneinander.

Gemäß der vorteilhaften Ausgestaltung wird der Zusammenhalt durch ein Federelement, insbesondere durch eine Ringfeder verbessert, der die Eingriffseinrichtung an dem Kugelflächenelement andrückt.

Gemäß der vorteilhaften Ausgestaltung ist die Außenseite des Kugelflächenelements konkav ausgebildet. Dies erleichtert die Montage, da das erste Gelenkbauteil mit dem Kugelflächenelement aus einem steiferen oder härteren Material gefertigt ist als das zweite Gelenkbauteil.

Die erfindungsgemäße Kugelgelenkvorrichtung wird zur Verbindung von Einrichtungen für indirekte Sicht mit einem Fahrzeug verwendet. Bei diesen Einrichtungen kann es sich um Monitore, herkömmliche Spiegel, Kamerasysteme, Sensoreinrichtungen oder Anzeigeeinrichtungen oder komplette Spiegelersatzsysteme handeln.

Weitere Einzelheiten, Merkmale und Vorteile der Erfindung ergeben sich aus der nachfolgenden Beschreibung bevorzugter Ausführungsformen anhand der Zeichnung.

Es zeigt
Figur 1 eine erste exemplarische Ausführungsform
Figur 2 eine zweite exemplarische Ausführungsform
Figur 3 eine perspektivische Darstellung eines zweiten Gelenkbauteils als Träger einer zusätzlichen Komponente nach der Erfindung,
Figur 4 ein zweites Gelenkbauteil in Form eines Spiegelkopfes, und
Figur 5 einen Spiegel mit einer Kugelgelenkvorrichtung nach dem Stand der Technik.

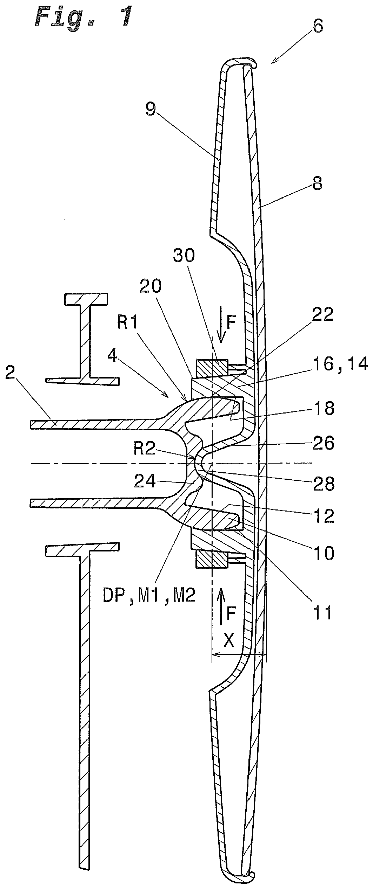

Die Ausführungsform nach Figur 1 zeigt ein erstes Gelenkbauteil 2 in Form eines Tragarms, an dem über ein Doppelkugelgelenk 4 ein zweites Gelenkbauteil 6 in Form eines Spiegelkopfes verstellbar befestigt ist. Der Spiegelkopf 6 weist eine Spiegelscheibe 8 und eine Spiegelhalteplatte 9 auf. Der Tragarm 2 weist an einem Ende ein wulstförmiges und kugelringförmiges Kugelflächenelement 10 mit einer konvexen, kugelringförmigen Außenseite 11 und einer schlauchförmigen Innenseite 12 auf. Die konvexe Außenseite 11 des Kugelflächenelements 10 wird von einer Eingriffseinrichtung 14 an der Spiegelhalteplatte 9 übergriffen wird. D. h. die Eingriffseinrichtung 14. greift hinter der Stelle der Außenseite 11 mit dem größten Durchmesser an. Dadurch ergibt sich eine Art Druckknopfverbindung zwischen den beiden Gelenkbauteilen 2 und 6. Die konvexe Außenseite 11 des Kugelflächenelements 10 weist einen ersten Krümmungsradius R1 um einen ersten Mittelpunkt M1 auf. Die Eingriffseinrichtung 14 ist becherförmig ausgebildet und weist eine Becherwand 16 mit einer Innenseite 18 und einer Außenseite 20 auf. Die Innenseite 18 der Becherwand 16 ist zumindest im oberen Bereich gerundet, so dass zwischen der konvexen Außenseite 11 des kugelringförmigen Kugelflächenelements 10 und der Innenseite 20 der Becherwand 16 eine erste Kontaktfläche 22 gebildet wird.

Innerhalb des kugelringförmigen Kugelflächenelements 10 ist eine konkave, kuppelförmige Aufnahme 24 vorgesehen, die einen zweiten Krümmungsradius R2 um einen zweiten Mittelpunkt M2 aufweist. Die Innenseite 12 des Kugelflächenelements 10 und der Oberseite der Aufnahme 24 definieren einen becherförmigen Innenraum. Von der Spiegelhalteplatte 9 des Spiegelkopfes 6 erstreckt sich mittig eine konvexe Kugelkappe 26 in den becherförmigen Innenraum des kugelringförmigen Kugelflächenelements 10 hinein und stützt sich auf der kugelkappenförmigen Aufnahme 24 ab. Hierdurch wird eine kugelkappenförmige, zweite Kontaktfläche 28 gebildet.

An der Außenseite 20 der Becherwand 16 umgreift eine Ringfeder 30 die Becherwand 16 der Eingriffseinrichtung 14 und drückt die Innenseite 18 der Becherwand 16 gegen die Außenseite 11 des kugelringförmigen Kugelflächenelements 10. Da die Verstellmomente bei dem Doppelkugelgelenk 4 sowohl über die erste Kontaktfläche 22 als auch über die zweite Kontaktfläche 28 übertragen werden, ist eine kleinere Bauform möglich, sodass der Drehpunkt DP des Doppelkugelgelenks 4 näher an der Spiegelscheibe 8 des Spiegelkopfs 6 liegt, d. h. der Abstand X zwischen Spiegelscheibe 8 und Drehpunkt wird kleiner.

Der Drehpunkt DP fällt bei der Ausführungsform nach Figur 1 mit den beiden Mittelpunkten M1 und M2 der beiden Krümmungsradien R1 und R2 zusammen. Alternativ können die beiden Mittelpunkte M1 und M2 auch im Zehntel-Millimeter-Bereich gegeneinander versetzt sein, so dass der Drehpunkt DP des Doppelkugelgelenks 4 zwischen den beiden Mittelpunkten M1 und M2 liegt. Auf diese Weise steht das Doppelkugelgelenk bei der Montage unter Vorspannung, wodurch Spiel vermieden wird.

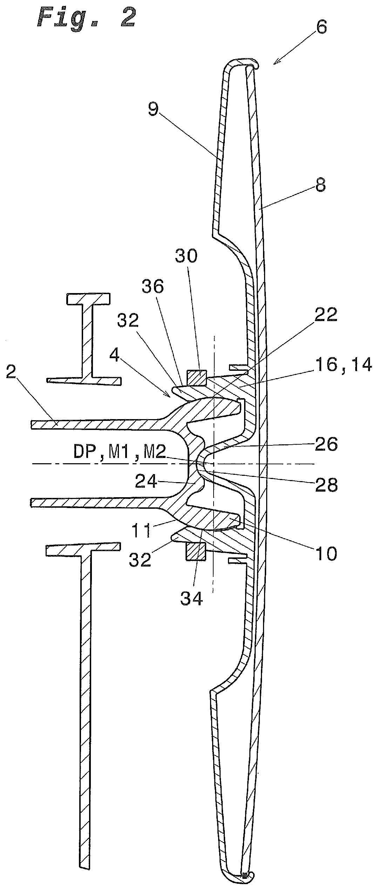

Figur 2 zeigt eine zweite Ausführungsform, die sich von der ersten Ausführungsform nach Figur 1 lediglich in der Ausgestaltung der Eingriffseinrichtung 14 unterscheidet. Die Eingriffseinrichtung 14 umfasst anstelle der becherförmigen Ausgestaltung eine Mehrzahl von ringförmig verteilt angeordneten Schnapphaken 32 mit einer Vorder- oder Kontaktseite 34 und einer Rückseite 36. Die Schnapphaken 32 übergreifen mit ihrer Kontaktseite 34 die konvexe Außenseite 11 des Kugelflächenelements 10, wodurch sich wieder eine Art Druckknopfverbindung ergibt. Die der konvexen Außenseite 11 des kugelringförmigen Kugelflächenelements 10 zugewandten Kontaktseiten 34 der Schnapphaken 32 sind gerundet und komplementär zur Form der konvexen Außenseite 11 des kugelringförmigen Kugelflächenelements 10 ausgebildet, so dass sich eine kugelstreifenförmige, erste Kontaktfläche 22 zwischen der Eingriffseinrichtung 14 und dem kugelringförmigen Kugelflächenelement 10 ergibt. Durch die komplementäre Formgebung des Kugelflächenelements 10 und Kontaktseite 34 der Schnapphaken 32 ergibt sich eine gegenüber der Ausführungsform nach Figur 1 vergrößerte erste Kontaktfläche 22. Der übrige Aufbau der zweiten Ausführungsform entspricht dem Aufbau der ersten Ausführungsform nach Figur 1.

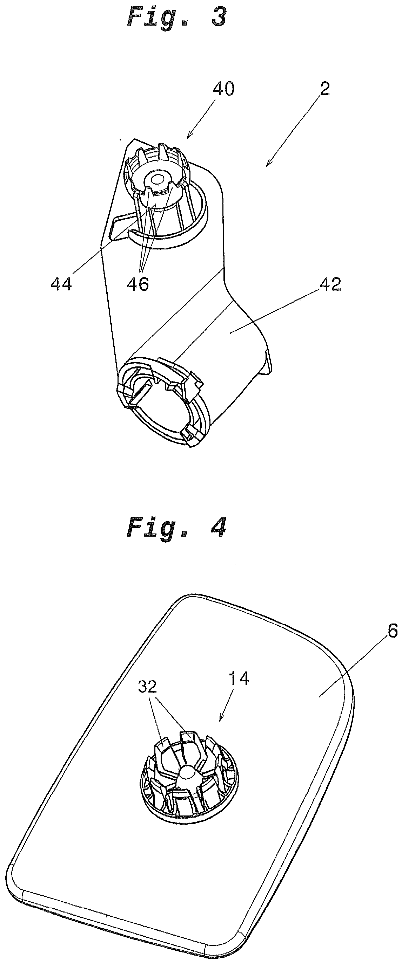

Figur 3 zeigt perspektivisch eine zweite Ausführungsform des ersten Gelenkbauteils 2 mit einem abschnittsweise kugelringförmigen Kugelflächenelement 40 an einem Ende und einem Rastelement 42 am anderen Ende des ersten Gelenkbauteils 2. Das abschnittsweise kugelringförmige Kugelflächenelement 40 weist mehrere über den Umfang verteilte kugelringförmige Abschnitte 44 auf, von denen sich jeweils zwei Zapfen 46 wegerstrecken, deren Außenseiten 11 auf der durch die kugelringförmigen Abschnitte 44 aufgespannten Kugelfläche liegen.

Figur 4 zeigt eine perspektivische Darstellung des Spiegelkopfes 6 gemäß Figur 2 mit der Eingriffseinrichtung 14 mit den ringförmig verteilten Schnapphaken 32.

Die beiden Gelenkbauteile 2 und 6 können sowohl aus Kunststoff oder Metall hergestellt werden. Üblicherweise sind das erste Gelenkbauteil 2 aus Metall oder hartem Kunststoff und das zweite Gelenkbauteil aus weicherem Kunststoff hergestellt.

Die beschriebenen beispielhaften Ausführungsformen zeigen Doppelkugelgelenke 4, mit manueller Verstellung. Die Doppelkugelgelenke lassen sich auch bei motorisch verstellen.

### Bezugszeichenliste:

- DP: Drehpunkt des Doppelkugelgelenks
- R1: erster Krümmungsradius
- M1: erster Mittelpunkt
- R2: zweiter Krümmungsradius
- M2: zweiter Mittelpunkt
- X: Abstand zwischen DP und Spiegelscheibe

- 2: erstes Gelenkbauteil, Tragarm
- 4: Doppelkugelgelenk
- 6: zweites Gelenkbauteil, Spiegelkopf
- 8: Spiegelscheibe
- 9: Spiegelhalteplatte
- 10: Kugelflächenelement
- 11: konvexe Außenseite von 10
- 12: schlauchförmige Innenseite von 10
- 14: Eingriffseinrichtung
- 16: Becherwand von 14
- 18: Innenseite von 16
- 20: Außenseite von 16
- 22: erste Kontaktfläche
- 24: konkave, kugelkappenförmige Aufnahme
- 26: konvexe Kugelkappe
- 28: zweite Kontaktfläche
- 30: Ringfeder
- 32: Schnapphaken
- 34: Vorder- oder Kontaktseite von 32
- 36: Rückseite von 32

- 40: abschnittsweise kugelringförmiges Kugelflächenelement
- 42: rohrförmiges Rastelement
- 44: kugelringförmige Abschnitte
- 46: Zapfen an 44

- 100: Spiegelkopf
- 102: Tragarm
- 104: Spiegelglas
- 106: Spiegelhalteplatte
- 108: konvexer kugelringförmiger Abschnitt
- 110: komplementär geformte Eingriffseinrichtung
- 112: Ringfeder

## Patentansprüche

1. Kugelgelenkvorrichtung zur verstellbaren Anordnung von einem ersten und einem zweiten Gelenkbauteil (2, 6) um einen Drehpunkt (DP), mit
einem Kugelflächenelement (10; 40) an dem ersten Gelenkbauteil (2) mit einer Außenseite (11), die Teil einer Kugelfläche ist und einen ersten Krümmungsradius (R1) mit einem ersten Mittelpunkt (M1) aufweist,
einer Eingriffseinrichtung (14) an dem zweiten Gelenkbauteil (6), die das Kugelflächenelement (10; 40) mit einer ersten Kontaktfläche (22) kontaktiert, einer innerhalb des Kugelflächenelements (10; 40) angeordneten, konkaven kugelkappenförmigen Aufnahme (24) an dem ersten oder zweiten Gelenkbauteil (2,6), die einen zweiten Krümmungsradius (R2) mit einem zweiten Mittelpunkt (M2) aufweist,
wobei das zweite oder erste Gelenkbauteil (6, 2) eine konvexe Kugelkappe (26) aufweist, die sich mit einer zweiten Kontaktfläche (28) in der kugelkappenförmigen Aufnahme (24) abstützt,
wobei der erste Krümmungsradius (R1) größer als der zweite Krümmungsradius (R2) ist, und
wobei die Eingriffseinrichtung (14) das Kugelflächenelement (10; 40) übergreift und die beiden Gelenkbauteile (2, 6) nach Art einer Druckknopfverbindung miteinander verbindet, **dadurch gekennzeichnet,**
**dass** das Kugelflächenelement (40) abschnittsweise kugelringförmig ausgebildet ist, und dass das Kugelflächenelement (40) mehrere über den Umfang verteilte kugelringförmige Abschnitte (44) aufweist.

2. Kugelgelenkvorrichtung nach Anspruch 1, **dadurch gekennzeichnet,**
**dass** die kugelkappenförmige Aufnahme (24) an dem ersten oder zweiten Gelenkbauteil (2, 6) eine Tiefe aufweist, die gleich oder kleiner ist als der Radius der Kugel aus der die kugelkappenförmige Aufnahme abgeleitet ist, so dass sich die konvexe Kugelkappe (26) lediglich in der kugelkappenförmigen Aufnahme (24) abstützt.

3. Kugelgelenkvorrichtung nach Anspruch 1 oder 2, **dadurch gekennzeichnet, dass** die konvexe Kugelkappe (26) komplementär zu der konkaven kugelkappenförmigen Aufnahme (24) geformt ist.

4. Kugelgelenkvorrichtung nach einem der vorhergehenden Ansprüche, **dadurch gekennzeichnet, dass** die Eingriffseinrichtung (14) an dem zweiten Gelenkbauteil (6), komplementär zu dem Kugelflächenelement (40) des ersten Gelenkbauteils (2) geformt ist.

5. Kugelgelenkvorrichtung nach einem der vorhergehenden Ansprüche, **dadurch gekennzeichnet, dass** der erste und der zweite Mittelpunkt (M1, M2) leicht zueinander versetzt sind, wodurch die beiden Gelenkbauteile (2, 6) unter Vorspannung miteinander verbunden sind.

6. Kugelgelenkvorrichtung nach einem der vorhergehenden Ansprüche, **dadurch gekennzeichnet, dass** das Kugelflächenelement (40) an dem ersten Gelenkbauteil (2) elastisch ist und gegen die Eingriffseinrichtung (14) an dem zweiten Gelenkbauteil (6) drückt.

7. Kugelgelenkvorrichtung nach einem der vorhergehenden Ansprüche, **dadurch gekennzeichnet, dass** die Eingriffseinrichtung (14) an dem zweiten Gelenkbauteil (6) elastisch ist und gegen das Kugelflächenelement (40) an dem ersten Gelenkbauteil (2) drückt.

8. Kugelgelenkvorrichtung nach einem der vorhergehenden Ansprüche, **gekennzeichnet durch** ein Federelement (30), das die Eingriffseinrichtung (14) an dem zweiten Gelenkbauteil (6) an das Kugelflächenelement (40) an dem ersten Gelenkbauteil (2) drückt.

9. Kugelgelenkvorrichtung nach Anspruch 8, **dadurch gekennzeichnet, dass** das Federelement eine Ringfeder (30) ist.

10. Kugelgelenkvorrichtung nach einem der vorhergehenden Ansprüche, **dadurch gekennzeichnet, dass** das Kugelflächenelement (40) an dem ersten Gelenkbauteil (2) eine konvexe Außenseite (11) aufweist.

11. Kugelgelenkvorrichtung nach einem der vorhergehenden Ansprüche, **dadurch gekennzeichnet,**
**dass** das Kugelflächenelement (40) Zapfen (46) aufweist, die sich von den kugelringförmigen Abschnitten (44) wegerstrecken, deren Außenseiten auf der durch die kugelringförmigen Abschnitte (44) aufgespannten Kugelfläche liegen.

12. Befestigungsvorrichtung zur Anbringung eines indirekten Sichtsystems oder von Komponenten eines indirekten Sichtsystems an oder in einem Fahrzeug, mit wenigstens einem fahrzeugseitigem Bauteil (2) und wenigstens einem sichtsystemseitigem Bauteil (6), wobei die Bauteile über wenigstens eine Kugelgelenkvorrichtung nach einem der vorhergehenden Ansprüche miteinander verbunden sind.

13. Indirektes Sichtsystem für Fahrzeuge, insbesondere Nutzfahrzeuge, mit einer Befestigungsvorrichtung nach Anspruch 12.

## Claims

1. A socket joint device for adjustably mounting a first and a second joint component (2, 6) about a pivot point (DP), having
a spherical surface element (10; 40) on the first joint component (2), with an exterior (11) that is part of a spherical surface and has a first radius of curvature (R1) with a first midpoint (M1),
an engagement mechanism (14) on the second joint component (6), which contacts the spherical surface element (10; 40) with a first contact surface (22),
a concave spherical cap-shaped receptacle (24) which is situated inside the spherical surface element (10; 40) at the first or second joint component (2, 6), the concave spherical cap-shaped receptacle (24) having a second radius of curvature (R2) with a second midpoint (M2),
wherein the second or first joint component (6, 2) has a convex spherical cap (26), which with a second contact surface (28) is supported in the spherical cap-shaped receptacle (24), and
wherein the first radius of curvature (R1) is larger than the second radius of curvature (R2), and
wherein the engagement mechanism (14) engages over the spherical surface element (10; 40) and connects the first and second joint component (2, 6) like a snap fastener, **characterized in that**
the spherical surface element (40) has a spherical ring shape in sections, and the spherical surface element (40) has several spherical ring-shaped sections (44) distributed over the circumference.

2. The socket joint device according to Claim 1, **characterized in that** the concave spherical cap-shaped receptacle (24) at the first or second joint component (2, 6) has a depth equal to or smaller than the radius of the sphere forming the basis of concave spherical cap-shaped receptacle (24), such that the convex spherical cap (26) is just supported in the spherical cap-shaped receptacle (24).

3. The socket joint device according to Claim 1 or 2, **characterized in that** the convex spherical cap (26) has a shape that is complementary to the concave spherical cap-shaped receptacle (24).

4. The socket joint device according to one of the preceding claims, **characterized in that** the engagement mechanism (14) on the second joint component (6) has a shape that is complementary to the spherical surface element (40) of the first joint component (2).

5. The socket joint device according to one of the preceding claims, **characterized in that** the first and second midpoints (M1, M2) are slightly offset relative to one another, thus joining the two joint components (2, 6) together under pretensioning.

6. The socket joint device according to one of the preceding claims, **characterized in that** the spherical surface element (40) on the first joint component (2) is elastic and presses against the engagement mechanism (14) on the second joint component (6).

7. The socket joint device according to one of the preceding claims, **characterized in that** the engagement mechanism (14) on the second joint component (6) is elastic and presses against the spherical surface element (40) on the first joint component (2).

8. The socket joint device according to one of the preceding claims, **characterized by** a spring element (30) that presses the engagement mechanism (14) on the second joint component (6) against the spherical surface element (40) on the first joint component (2).

9. The socket joint device according to Claim 8, **characterized in that** the spring element is an annular spring (30).

10. The socket joint device according to one of the preceding claims, **characterized in that** the spherical surface element (40) on the first joint component (2) has a convex exterior side (11).

11. The socket joint device according to one of the preceding claims, **characterized in that** the spherical surface element (40) has pins (46) that extend away from the spherical ring-shaped sections (44), and whose exteriors rest on the spherical surface spanned by the spherical ring-shaped sections (44).

12. A fastening device for mounting an indirect visual system or components of an indirect visual system on or in a vehicle, having at least one component (2) on the vehicle side and at least one component (6) on the visual-system side, the components being joined together via at least one socket joint device according to one of the preceding claims.

13. An indirect visual system for vehicles, in particular utility vehicles, having a fastening device according to Claim 12.

## Revendications

1. Dispositif formant articulation à rotule pour l'agencement mobile d'une première et d'une deuxième partie d'articulation (2, 6) autour d'un point de pivot (DP), comprenant
un élément de surface sphérique (10 ; 40) sur la première partie d'articulation (2), pourvu d'une face extérieure (11) qui fait partie d'une surface sphérique et qui présente un premier rayon de courbure (R1) pourvu d'un premier centre (M1),
un dispositif de mise en contact (14) sur la deuxième partie d'articulation (6), qui met en contact l'élément de surface sphérique (10 ; 40) avec une première surface de contact (22),
un logement (24) en forme de calotte sphérique concave, agencé à l'intérieur de l'élément de surface sphérique (10 ; 40), sur la première ou la deuxième partie d'articulation (2, 6), lequel logement présente un deuxième rayon de courbure (R2) pourvu d'un deuxième centre (M2),
dans lequel la deuxième ou première partie d'articulation (6, 2) présente une calotte sphérique (26) convexe qui s'appuie par une deuxième surface de contact (28) dans le logement (24) en forme de calotte sphérique,
dans lequel le premier rayon de courbure (R1) est plus grand que le deuxième rayon de courbure (R2), et
dans lequel le dispositif de mise en contact (14) vient se plaquer au-dessus de l'élément de surface sphérique (10 ; 40) et relie les deux parties d'articulation (2, 6) l'une à l'autre à la façon d'une liaison à bouton-poussoir, **caractérisé**
**en ce que** l'élément de surface sphérique (40) est réalisé sur certaines sections en forme de bague sphérique, et **en ce que** l'élément de surface sphérique (40) comprend plusieurs sections (44) en forme de bague sphérique réparties sur la périphérie.

2. Dispositif formant articulation à rotule selon la revendication 1, **caractérisé**
**en ce que** le logement en forme de calotte sphérique (24) présente sur la première ou la deuxième partie d'articulation (2, 6) une profondeur qui est inférieure ou égale au rayon de la sphère dont le logement en forme de calotte sphérique est dérivé, de sorte que la calotte sphérique (26) convexe s'appuie uniquement dans le logement en forme de calotte sphérique (24).

3. Dispositif formant articulation à rotule selon la revendication 1 ou 2, **caractérisé en ce que** la calotte sphérique (26) convexe est formée de manière complémentaire au logement en forme de calotte sphérique (24) concave.

4. Dispositif formant articulation à rotule selon l'une quelconque des revendications précédentes, **caractérisé en ce que** le dispositif de mise en contact (14) est formé sur la deuxième partie d'articulation (6), de manière complémentaire à l'élément de surface sphérique (40) de la première partie d'articulation (2).

5. Dispositif formant articulation à rotule selon l'une quelconque des revendications précédentes, **caractérisé en ce que** le premier et le deuxième centre (M1, M2) sont légèrement décalés l'un de l'autre, de sorte que les deux parties d'articulation (2, 6) sont reliées l'une à l'autre sous l'effet d'une précontrainte.

6. Dispositif formant articulation à rotule selon l'une quelconque des revendications précédentes, **caractérisé en ce que** l'élément de surface sphérique (40) sur la première partie d'articulation (2) est élastique et effectue une pression contre le dispositif de mise en contact (14) sur la deuxième partie d'articulation (6).

7. Dispositif formant articulation à rotule selon l'une quelconque des revendications précédentes, **caractérisé en ce que** le dispositif de mise en contact (14) sur la deuxième partie d'articulation (6) est élastique et effectue une pression contre l'élément de surface sphérique (40) sur la première partie d'articulation (2).

8. Dispositif formant articulation à rotule selon l'une quelconque des revendications précédentes, **caractérisé par** un élément ressort (30), qui presse le dispositif de mise en contact (14) sur la deuxième partie d'articulation (6) contre l'élément de surface sphérique (40) sur la première partie d'articulation (2).

9. Dispositif formant articulation à rotule selon la revendication 8, **caractérisé en ce que** l'élément ressort est un ressort annulaire (30).

10. Dispositif formant articulation sphérique selon l'une quelconque des revendications précédentes, **caractérisé en ce que** l'élément de surface sphérique (40) sur la première partie d'articulation (2) présente une face extérieure (11) convexe.

11. Dispositif formant articulation à rotule selon l'une quelconque des revendications précédentes, **caractérisé**
**en ce que** l'élément de surface sphérique (40) présente des tourillons (46), qui s'étendent à distance des sections (44) en forme de bague sphérique, dont les faces extérieures se situent sur la surface sphérique définie par les sections (44) en forme de bague sphérique.

12. Dispositif de fixation pour le montage d'un système de vision indirect ou de composants d'un système de vision indirect sur ou dans un véhicule, comprenant au moins une partie (2) côté véhicule et au moins une partie (6) côté système de vision, dans lequel les parties sont reliées l'une à l'autre par l'intermédiaire d'au moins un dispositif formant articulation à rotule selon l'une quelconque des revendications précédentes.

13. Système de vision indirect pour véhicules, en particulier véhicules utilitaires, comprenant un dispositif de fixation selon la revendication 12.
